(19)

Europäisches Patentamt

European Patent Office

Office européen des brevets

(11) **EP 3 086 167 A1**

(12) **EUROPEAN PATENT APPLICATION**
published in accordance with Art. 153(4) EPC

(43) Date of publication:
**26.10.2016 Bulletin 2016/43**

(21) Application number: **14871172.4**

(22) Date of filing: **20.11.2014**

(51) Int Cl.:
**G02F 1/13** *(2006.01)*     **G02F 1/1343** *(2006.01)*
**G02F 1/1347** *(2006.01)*

(86) International application number:
**PCT/JP2014/080758**

(87) International publication number:
**WO 2015/093223 (25.06.2015 Gazette 2015/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.12.2013 JP 2013262481**

(71) Applicant: **Citizen Holdings Co., Ltd.**
**Nishitokyo-shi, Tokyo 188-8511 (JP)**

(72) Inventors:
• **TANABE, Ayano**
**Nishitokyo-shi**
**Tokyo 188-8511 (JP)**
• **MATSUMOTO, Kenji**
**Nishitokyo-shi**
**Tokyo 188-8511 (JP)**

• **YOKOYAMA, Masafumi**
**Nishitokyo-shi**
**Tokyo 188-8511 (JP)**
• **HASHIMOTO, Nobuyuki**
**Nishitokyo-shi**
**Tokyo 188-8511 (JP)**
• **KURIHARA, Makoto**
**Minamitsuru-gun**
**Yamanasi 401-0395 (JP)**
• **NEMOTO, Tomomi**
**Sapporo-shi, Hokkaido 060-0808 (JP)**
• **HIBI, Terumasa**
**Sapporo-shi, Hokkaido 060-0808 (JP)**
• **IPPONJIMA, Sari**
**Sapporo-shi, Hokkaido 060-0808 (JP)**

(74) Representative: **Patentanwälte**
**Ruff, Wilhelm, Beier, Dauster & Partner mbB**
**Kronenstraße 30**
**70174 Stuttgart (DE)**

(54) **OPTICAL MODULATION ELEMENT**

(57)     A liquid crystal optical device includes multiple liquid crystal elements (2-1 to 2-3) arranged along the optical axis. In this liquid crystal optical device, each of the liquid crystal elements includes a liquid crystal layer 10 in which liquid crystal molecules 15 aligned along a predetermined direction are contained, and two transparent electrodes 13, 14 that are disposed so as to face each other with the liquid crystal layer 10 disposed therebetween. At least one of the two transparent electrodes includes multiple partial electrodes (13-1 to 13-n), and, for each of levels obtained by dividing, by a predetermined number of the levels, difference between a maximum value and a minimum value of a phase modulation amount in a phase distribution provided to a luminous flux passing through the liquid crystal layer, at least one of the multiple partial electrodes is disposed on a part of the liquid crystal layer, the part providing the luminous flux with a phase modulation amount corresponding to the level. A position of the boundary between any two adjacent ones of the partial electrodes, with respect to the luminous flux, is different for each of the liquid crystal elements.

**EP 3 086 167 A1**

FIG. 4A

PHASE
MODULATION
AMOUNT

400  410

POSITION

V    O

411

FIG. 4B

400    $\frac{7}{6}$V    420

O

421

FIG. 4C

400    $\frac{7}{6}$V    430

O

431

**Description**

FIELD

The present invention relates to a liquid crystal optical device that provides a luminous flux with a certain phase distribution.

BACKGROUND

Studies have been made for changing the focal length of an optical system or for correcting aberrations in the optical system by using a liquid crystal element that is disposed in the optical system and providing a luminous flux passing through the liquid crystal element with a desired phase distribution by the use of the variable refraction index of the liquid crystal element. For example, Patent Literature 1 discloses a liquid crystal element that can adjust the focal length. The liquid crystal element includes a liquid crystal layer, and multiple ring-shaped transparent electrodes are formed concentrically on at least one surface of the liquid crystal layer. The adjustment is made by adjusting, for each ring-shaped transparent electrode, voltage to be applied between the transparent electrode and another transparent electrode facing the transparent electrode with the liquid crystal layer disposed therebetween.

Citation List

Patent Literature

Patent Literature 1: Published Japanese Translation of PCT International Publication for Patent Application (Kohyo) No. 2008-529064

SUMMARY

Technical Problem

As described above, the refraction index of the liquid crystal layer is adjusted by adjusting voltage to be applied between two transparent electrodes facing each other with the liquid crystal layer disposed therebetween. In this case, the transparent electrode formed on at least one surface of the liquid crystal layer is patterned with multiple partial electrodes to which different voltages can be applied, to adjust the refraction index of the liquid crystal layer according to the pattern of the transparent electrode. Consequently, a luminous flux passing through the liquid crystal layer is provided with a discrete phase distribution corresponding to the pattern of the transparent electrode. In order to reduce the difference between an ideal continuous phase distribution to be provided to the luminous flux passing through the liquid crystal layer and a phase distribution actually provided to the luminous flux, it is necessary to reduce the size of each partial electrode and also to increase the number of partial electrodes.

However, using a larger number of partial electrodes leads to an increase in the number of gaps for insulating adjacent partial electrodes from each other. In addition, the number of lead-out electrodes led from the partial electrodes to the outside of the liquid crystal element is also increased, to electrically connect the control circuit of the liquid crystal element with the partial electrodes. Since light beams passing through the parts corresponding to the gaps and lead-out electrodes in the liquid crystal layer are not made by desired phase modulation by the liquid crystal layer, and hence the increase in the number of gaps and lead-out electrodes leads to a decrease in optical performance of the liquid crystal element. Moreover, it is difficult to reduce the sizes of partial electrodes limitlessly since there are restrictions due to a processing technique used for forming the transparent electrode on the surface of the liquid crystal layer.

In view of this, the present invention provides a liquid crystal optical device that can provide a luminous flux with a phase distribution which has a more minute resolution than that of a transparent-electrode pattern formed on a surface of a liquid crystal layer.

Solution to Problem

According to an aspect of the present invention, a liquid crystal optical device including N liquid crystal elements arranged along an optical axis where N is an integer larger than or equal to two is provided. In the liquid crystal optical device, each of the N liquid crystal elements includes: a liquid crystal layer in which liquid crystal molecules aligned along a predetermined direction are contained; and two transparent electrodes that are disposed so as to face each other with the liquid crystal layer disposed therebetween. At least one of the two transparent electrodes includes multiple partial electrodes, and, for each level obtained by dividing, by a predetermined number of the levels, a difference between a maximum value and a minimum value of a phase modulation amount in a phase distribution provided to a luminous flux passing through the liquid crystal layer, at least one of the multiple partial electrodes is disposed on a part of the liquid crystal layer, the part providing the luminous flux with a phase modulation amount corresponding to the level. A position of boundary between any two adjacent ones of the partial electrodes, with respect to the luminous flux, is different for each of the liquid crystal elements.

Preferably, in this liquid crystal optical device, for each of the N liquid crystal elements, the plurality of partial electrodes are disposed in the liquid crystal element so that the phase modulation amounts of the respective levels are different for each of the N liquid crystal elements by phase modulation amount difference obtained by dividing, by the N equally, a phase modulation amount which corresponds to difference between adjacent levels and is obtained by dividing the difference between the maximum value and the minimum value of the phase modulation amount by the predetermined number of levels equally.

Moreover, in this liquid crystal optical device, in at least one of the N liquid crystal elements, the multiple partial electrodes are preferably disposed so that, as an interval between positions corresponding to two adjacent extreme values of the phase modulation amount at a plane orthogonal to the optical axis is smaller, number of levels of phase modulation amount included in the interval becomes smaller.

Moreover, in the liquid crystal optical device, positions of lead-out electrodes supplying electric power to the multiple partial electrodes, at a plane orthogonal to the optical axis are preferably the same among the multiple liquid crystal elements.

Further, the liquid crystal optical device preferably further include a control circuit that applies, between each of the multiple partial electrodes and the transparent electrode facing the partial electrode, voltage according to the level of phase modulation amount that a luminous flux passing through a part in which the partial electrode is disposed in the liquid crystal layer for each of the N liquid crystal elements.

Further, in the liquid crystal optical device, for each of the N liquid crystal elements, each two partial electrodes adjacent to each other among the multiple partial electrodes are preferably connected to each other by a resistor. In this case, the control circuit preferably applies voltage between the partial electrode corresponding to a position at which the phase modulation amount is a local maximum value in a phase modulation profile and the transparent electrode facing the partial electrode so that the phase modulation amount is to be a local maximum value, and applies voltage between the partial electrode corresponding to a position at which the phase modulation amount is a local minimum value in the phase modulation profile and the transparent electrode facing the partial electrode so that the phase modulation amount is to be a local minimum value.

Further, in the liquid crystal optical device, the predetermined number of levels for a first liquid crystal element of the N liquid crystal elements are preferably first number of levels, and the predetermined number of levels for each of the others of the N liquid crystal elements is preferably second number of levels corresponding to a number obtained by adding one to the first number of levels. In this case, the control circuit preferably controls voltage between each of the partial electrodes and the transparent electrode facing the partial electrode for each of the liquid crystal elements so that a ratio of a second voltage difference to a first voltage difference is equal to a ratio of the second number of levels to the first number of levels. The first voltage difference is difference between first voltage difference between voltage applied between the partial electrode corresponding to the maximum value of the phase modulation amount among the multiple partial electrodes and the transparent electrode facing the partial electrode and voltage applied between the partial electrode corresponding to the minimum value of the phase modulation amount and the transparent electrode facing the partial electrode in the first liquid crystal element and the second voltage difference is difference between voltage applied between the partial electrode corresponding to the maximum value of the phase modulation amount among the multiple partial electrodes and the transparent electrode facing the partial electrode and voltage applied between the partial electrode corresponding to the minimum value of the phase modulation amount and the transparent electrode facing the partial electrode in each of the other liquid crystal elements.

Advantageous Effects of Invention

According to the present invention, the liquid crystal optical device can provide a luminous flux passing through a liquid crystal optical element with a phase distribution corresponding to a more minute resolution than that of a transparent-electrode pattern formed on a surface of a liquid crystal layer.

BRIEF DESCRIPTION OF DRAWINGS

FIG. 1 is a schematic configuration diagram of a liquid crystal optical device according to an embodiment of the present invention.

FIG. 2A is a schematic side view of a liquid crystal element included in the liquid crystal optical device. FIG. 2B is a schematic front view of the liquid crystal element included in the liquid crystal optical device.

FIG. 3 is a diagram illustrating an example of a phase distribution for symmetric aberration correction with which the liquid crystal optical device provides a luminous flux.

FIGs. 4A to 4C are diagrams representing an example of phase distributions that respective liquid crystal elements provide to a luminous flux and corresponding annular-electrode patterns.

FIG. 5 is a diagram illustrating difference among the phase distributions with which the respective liquid crystal elements provide a luminous flux.

FIG. 6 is a graph illustrating an example of a phase distribution provided to a luminous flux passing through the entire liquid crystal optical device.

FIG. 7 is a diagram representing a relationship between annular electrodes and voltages to be applied.

FIG. 8 is a diagram representing another example of the phase distributions with which the respective liquid crystal elements provide a luminous flux.

FIG. 9 is a graph illustrating another example of the phase distribution provided to a luminous flux passing through the entire liquid crystal optical device.

FIGs. 10A to 10C are diagrams representing an example of phase distributions with which respective liquid crystal elements provide a luminous flux and corresponding annular-electrode patterns, according to a modified example.

FIG. 11 is a diagram illustrating the difference among the phase distributions with which the respective liquid crystal elements provide a luminous flux, according to the modified example.

FIG. 12 is a diagram illustrating an example of a phase distribution provided to a luminous flux passing through the entire liquid crystal optical device, according to the modified example.

FIG. 13 is a schematic configuration diagram of a laser microscope including the liquid crystal optical device according to the embodiment or modified example.

DESCRIPTION OF EMBODIMENTS

A preferred embodiment of a liquid crystal optical device according to the present invention is described below in detail with reference to the drawings.

The liquid crystal optical device includes multiple liquid crystal elements in an optical-axis direction. Each liquid crystal element includes a liquid crystal layer and two transparent electrodes facing each other with the liquid crystal layer disposed therebetween. At least one of the two transparent electrodes included in each liquid crystal element is formed of multiple partial electrodes arranged according to a phase distribution to be provided to a luminous flux passing through the liquid crystal optical device. The arrangement of the partial electrodes is determined so that, for each of two partial electrodes adjacent to each other in the liquid crystal layer, the difference in level of phase modulation amount provided to partial luminous fluxes passing through the respective areas corresponding to the two partial electrodes are the same with each other. Further, the partial electrodes are arranged so that the positions of the boundaries between the partial electrodes with respect to a luminous flux passing through the liquid crystal optical device are different for each liquid crystal element. With this configuration, the liquid crystal optical device provides a luminous flux with a phase distribution having a higher resolution than that of the electrode pattern of each liquid crystal element.

When a luminous flux entering the liquid crystal optical device is a parallel luminous flux and the distances from the optical axis to the boundaries of the partial electrodes are different for each liquid crystal element, the positions of the boundaries between the partial electrodes with respect to a luminous flux passing through the liquid crystal optical device are different for each liquid crystal element. In contrast, when a luminous flux entering the liquid crystal optical device is a diffused light flux or a convergent light flux and the ratios each between the distance from the optical axis to the periphery of the luminous flux and the distance from the optical axis to the boundary between partial electrodes are different for each liquid crystal element, the positions of the boundaries between the partial electrodes with respect to a luminous flux passing through the liquid crystal optical device are different for each liquid crystal element.

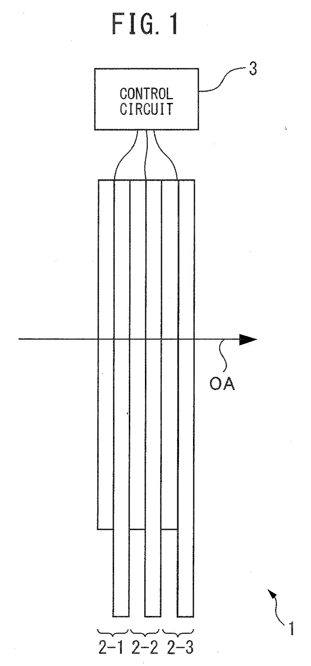

FIG. 1 is a schematic configuration diagram of a liquid crystal optical device according to an embodiment of the present invention. A liquid crystal optical device 1 includes three liquid crystal elements 2-1 to 2-3 along an optical axis OA of an optical system in which the liquid crystal optical device is disposed, and a control circuit 3 configured to control each of the liquid crystal elements. A luminous flux passing through the liquid crystal optical device 1 is phase-modulated by the liquid crystal elements 2-1 to 2-3 by passing through a liquid crystal layer included in each of the liquid crystal elements 2-1 to 2-3. With this configuration, the liquid crystal optical device 1 provides the luminous flux with a desired phase distribution, e.g., a phase distribution for correcting wavefront aberrations occurring at the optical system in which the liquid crystal optical device 1 is disposed.

Note that the number of liquid crystal elements included in the liquid crystal optical device 1 is not limited to three as long as being two or more.

The liquid crystal elements 2-1 to 2-3 included in the liquid crystal optical device 1 are described below. The liquid crystal elements 2-1 to 2-3 have the same configuration and functions except for the arrangement patterns of transparent electrodes. Therefore, description is given only of the liquid crystal element 2-1 below.

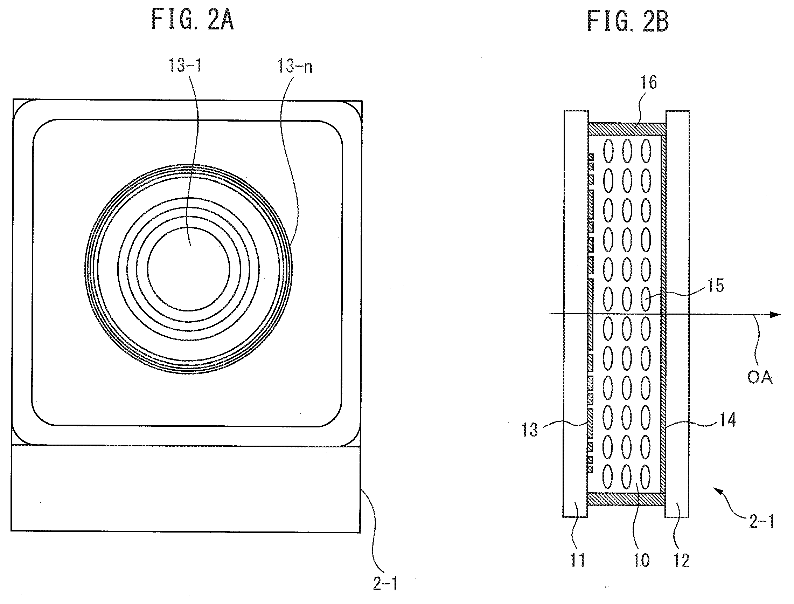

FIG. 2A is a schematic front view of the liquid crystal element 2-1, and FIG. 2B is a schematic side view of the liquid crystal element 2-1.

The liquid crystal element 2-1 includes a liquid crystal layer 10 and transparent substrates 11 and 12 disposed, substantially in parallel with each other, on two respective sides of the liquid crystal layer 10 along the optical axis OA. Liquid crystal molecules 15 in the liquid crystal layer 10 are contained in the space surrounded by the transparent substrates 11 and 12 and a sealing member 16. In Fig. 2B, the size of the liquid crystal molecules 15 is exaggerated in comparison with the actual size of liquid crystal molecules for the purpose of illustration. The liquid crystal element 2-1 also includes a transparent electrode 13 disposed between the transparent substrate 11 and the liquid crystal layer 10, and a transparent electrode 14 disposed between the liquid crystal layer 10 and the transparent substrate 12. The transparent substrates 11 and 12 are made of a material transparent to light having a wavelength within a predetermined wave range, such as glass or resin. The transparent electrodes 13 and 14 are made, for example, of a material referred to as ITO, which is made by adding tin oxide to indium oxide. An alignment film (not illustrated) for aligning the liquid crystal molecules 15 in a predetermined direction may be disposed between each of the transparent electrodes 13 and 14 and the liquid crystal layer 10.

The transparent electrode 13 includes multiple annular electrodes 13-1 to 13-n concentrically arranged while having the optical axis OA at the center. Each annular electrode is an example of a partial electrode. The multiple annular electrodes cover the entire active area, in which the phase of a luminous flux passing through the liquid crystal element 2-1 can be modulated, in the liquid crystal layer 10, by the control circuit 3 driving the liquid crystal molecules. In contrast, the transparent electrode 14 is formed as a single circular electrode covering the entire active area. Note, however, that the transparent electrode 14 may include multiple annular electrodes concentrically arranged, as the transparent electrode 13. Different voltages are applied between the respective annular electrodes and the transparent electrode 14, and thereby the luminous flux is provided with different phase modulation amounts for respective annular portions of the liquid crystal layer 10 corresponding to the annular electrodes (the portions being referred to simply as annular portions below, for the purpose of illustration). Hence, the luminous flux passing through the liquid crystal element 2-1 can be provided with a desired phase distribution by the control circuit 3 adjusting voltage to be applied to each annular electrode.

The liquid crystal molecules 15 contained in the liquid crystal layer 10 are aligned, for example, so as to have homogeneous alignment so that the long-axis direction of the liquid crystal molecules 15 are substantially in parallel with the polarization plane of linearly polarized light beams entering the liquid crystal element 2-1. In other words, the liquid crystal molecules 15 are aligned so that the long-axis directions of the liquid crystal molecules 15 are parallel with each other, and are parallel with each of the interfaces between the transparent substrate 11 and the liquid crystal layer 10 and between the transparent substrate 12 and the liquid crystal layer 10. Liquid crystal molecules contained in the liquid crystal layer of each of the liquid crystal elements 2-2 and 2-3 are also aligned in the same direction as the alignment direction of the liquid crystal molecules of the liquid crystal element 2-1.

The liquid crystal molecules 15 have different refractive indices in their long-axis direction and the direction orthogonal to the long-axis direction; a refractive index $n_e$ for polarized components parallel with the long-axis directions of the liquid crystal molecules 15 (extraordinary ray) is higher than a refractive index $n_o$ for polarized components parallel with the short-axis directions of the liquid crystal molecules 15 (ordinary ray). Hence, the liquid crystal element 2-1 with the liquid crystal molecules 15 aligned so as to have homogeneous alignment acts as a uniaxial birefringent element.

The liquid crystal molecules 15 have permittivity anisotropy, and force is exerted normally in the direction of the long axes of liquid crystal molecules following the electric-field direction. Specifically, when voltage is applied between the transparent electrodes 13 and 14 formed on the two transparent substrates 11 and 12 with the liquid crystal molecules 15 disposed therebetween, the long-axis directions of the liquid crystal molecules 15 are inclined toward the direction orthogonal to the surfaces of the transparent substrates 11 and 12 according to the applied voltage, from the state parallel with the transparent substrates 11 and 12. Wherein, for a luminous flux of polarized components parallel with the long axes of the liquid crystal molecules 15, a refractive index $n_\phi$ of the liquid crystal layer 10 is $n_o \leq n_\phi \leq n_e$ (where $n_o$ denotes the refractive index for ordinary light and $n_e$ denotes the refractive index for extraordinary light). Accordingly, assume that the thickness of the liquid crystal layer 10 is denoted by d, an optical-path length difference $\Delta nd$ ($= n_e d - n_\phi d$) occurs between a luminous flux passing through an area to which voltage is applied and a luminous flux passing through an area to which no voltage is applied in the liquid crystal layer 10. Accordingly, the phase difference between the two luminous fluxes is $2\pi\Delta nd/\lambda$. Wherein, $\lambda$ denotes the wavelength of a luminous flux entering the liquid crystal layer 10. Assume that, when a voltage $V_a$ is applied to an annular portion, the refractive index of the annular portion of the liquid crystal layer 10 is $n_a$, and when a voltage $V_b$ is applied to a different annular portion, the refractive index of the annular portion of the liquid crystal layer 10 is $n_b$. In this case, the phase difference occurring between the luminous fluxes passing through the two respective annular portions is $2\pi(n_a - n_b)d/\lambda$.

The refractive index of the liquid crystal layer 10 varies according to the wavelength of a luminous flux entering the liquid crystal layer 10. Hence, the control circuit 3 adjusts voltage to be applied to each of the annular electrodes according to the wavelength of an entering luminous flux, and thereby a luminous flux passing through the liquid crystal element 2-1 can be provided with a predetermined phase distribution irrespective of the wavelength of the entering luminous flux.

Next, description is given of a method of determining an alignment pattern of the annular electrodes included in the transparent electrode 13 of each of the liquid crystal elements 2-1 to 2-3. First, a phase modulation profile desired to be displayed on the liquid crystal optical device 1 is determined. The phase modulation profile is determined so as to correct symmetric wavefront aberrations having the optical axis OA at the center, such as spherical aberration, occurring at the entire optical system including the liquid crystal optical device 1, for example. In this case, the phase modulation profile represents a phase distribution reverse of that of the wavefront aberrations occurring at the entire optical system including the liquid crystal optical device 1.

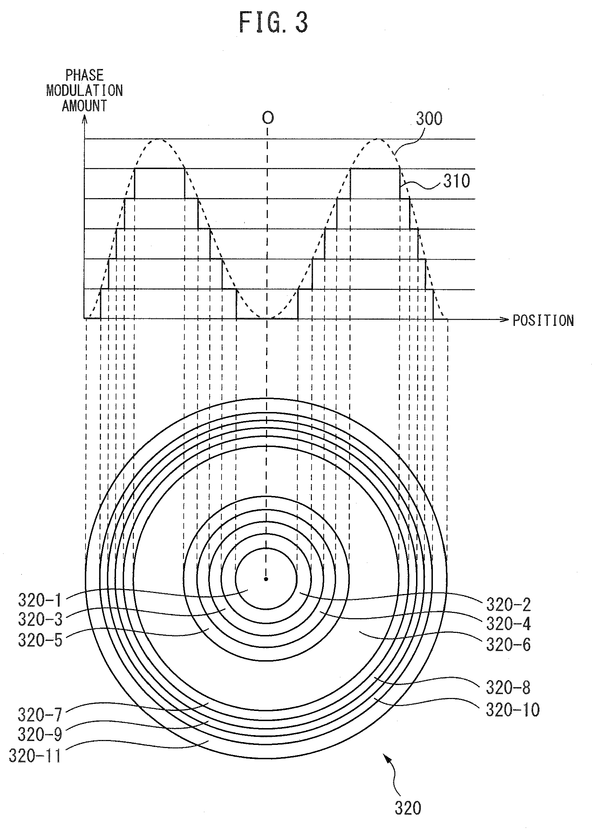

FIG. 3 is a diagram illustrating an example of a phase modulation profile for symmetric wavefront aberration correction with which the liquid crystal optical device 1 provides a luminous flux. In the upper part of FIG. 3, the horizontal axis represents positions at a plane orthogonal to the optical axis OA. In the horizontal axis, the position of the optical axis OA is indicated by 0. The vertical axis represents phase modulation amount. A curve 300 represents a phase modulation profile. In this embodiment, an annular-electrode arrangement pattern is determined by dividing the phase modulation profile 300 so that the phase differences between adjacent annular portions are to be equal. When the phase differences between adjacent annular portions are equal, it is possible to provide a phase modulation profile 310 discretely approximating the phase modulation profile 300 by connecting each two adjacent annular electrodes by a resistance having the same resistance value as is described later.

In the lower part of FIG. 3, an annular-electrode pattern 320 corresponding to the discrete phase modulation profile 310 is illustrated. In FIG. 3, the gaps between the annular electrodes are indicated by solid lines. Specifically, the rings and a circle divided by sloid lines, in the order from the center correspond to respective annular electrodes 320-1 to 320-11. In this example, the difference between the maximum phase modulation amount and the minimum phase modulation amount of the phase modulation profile 300 is divided into six equally (i.e., the number of levels of phase modulation amount is six), and the number of corresponding annular electrodes is 11.

Further, in this embodiment, an annular-electrode pattern for each liquid crystal element is determined so that the boundaries at each of which the phase modulation amount changes are different for each liquid crystal element, i.e., the boundaries between the annular portions are at different positions of the luminous flux passing through the liquid crystal optical device 1. For example, the position and range of each annular portion of each liquid crystal element that provides a luminous flux with a phase modulation amount of an L-th level from the level of the minimum phase modulation amount, when the difference between the maximum phase modulation amount and the minimum phase modulation amount of the phase modulation profile to be displayed by the liquid crystal optical device 1 is divided into M equally (i.e., the number of levels of phase modulation amount is M, where M is an integer larger than or equal to two), is determined according to the following equation.

$$(L - k/N)/M \leq F(x,y) < (L + 1 - k/N)/M \qquad (1)$$

(when k=0, $0 \leq L < M$; when k=1, 2,..., N-1, $0 \leq L \leq M$)

Wherein, x,y denotes the coordinates of each of two axes orthogonal to each other at a plane orthogonal to the optical axis, and F(x,y) denotes the phase modulation amount of the normalized phase modulation profile at the coordinates (x,y). The normalized phase modulation profile is obtained by normalizing a phase modulation profile displayed by each of liquid crystal elements so that the maximum phase modulation amount is to be one. Moreover, N denotes the number of liquid crystal elements included in the liquid crystal optical device 1 and modulating the phase of luminous fluxes having the same polarization direction, and is an integer larger than or equal to two. Further, k denotes the number of each of the liquid crystal elements modulating the phase of luminous fluxes having the same polarization direction. For example, in this embodiment, N=3, and k=0 to 2 correspond to the respective liquid crystal elements 2-1 to 2-3. Note that the number k in equation (1) does not correspond to the order of the liquid crystal elements along the optical axis OA. The number k corresponding to each liquid crystal element may be determined in any order.

The set of coordinates (x,y) satisfying equation (1) corresponds to the position and range of the L-th annular portion. Then, a single annular electrode is disposed in each annular portion. In other words, in each liquid crystal element, for each of positions corresponding to the respective phase modulation amount levels obtained by equally dividing the difference between the minimum value and the maximum value of the phase modulation amount by a predetermined number of levels, an annular electrode which applies a different voltage to the liquid crystal layer is disposed at the position. Consequently, the differences in phase modulation amount between adjacent levels are the same among the liquid crystal elements. In addition, phase modulation amount levels are shifted for each liquid crystal element by the difference in phase modulation amount obtained by equally dividing, by the number of liquid crystal elements included in the liquid crystal optical device, the difference in phase modulation amount between adjacent levels when the difference between the minimum value and the maximum value of the phase modulation amount is equally divided by the predetermined number of levels. With this configuration, each annular portion of each liquid crystal element is shifted by approximately 1/N of the width of the annular portion with respect to the corresponding annular portion of each different liquid crystal element.

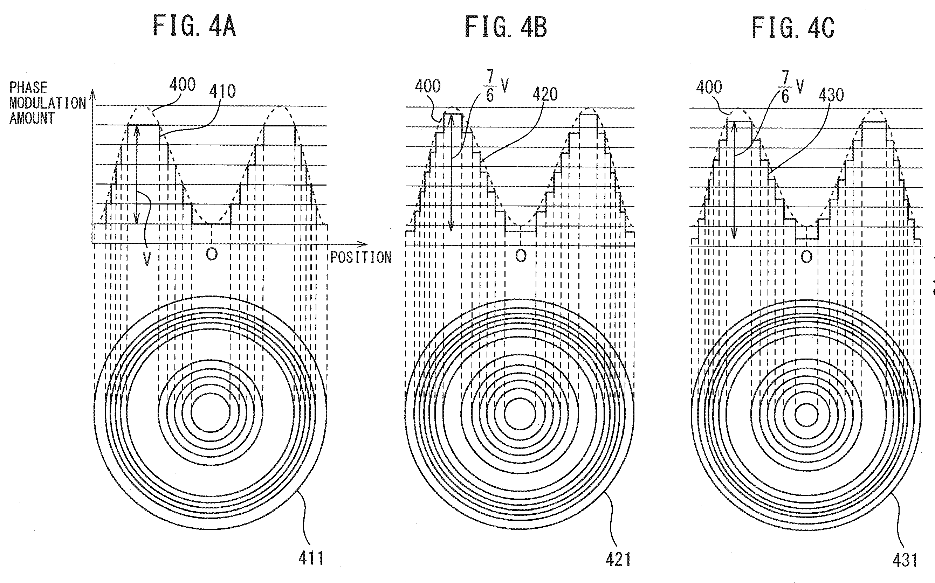

FIG. 4A to FIG. 4C are diagrams illustrating an example of phase modulation profiles of the respective liquid crystal elements 2-1 to 2-3 and corresponding annular-electrode patterns determined according to equation (1) when N=3 and M=6. In the upper part of each of FIG. 4A to FIG. 4C, the horizontal axis represents positions at a plane orthogonal to the optical axis OA. In the horizontal axis, the position of the optical axis OA is indicated by 0. The vertical axis represents phase modulation amounts. In the lower part of each of FIG. 4A to FIG. 4C, annular-electrode patterns 411, 421, and 431 formed on the respective liquid crystal elements 2-1 to 2-3 are illustrated. As in FIG. 3, the gaps between the annular electrodes are indicated by solid lines.

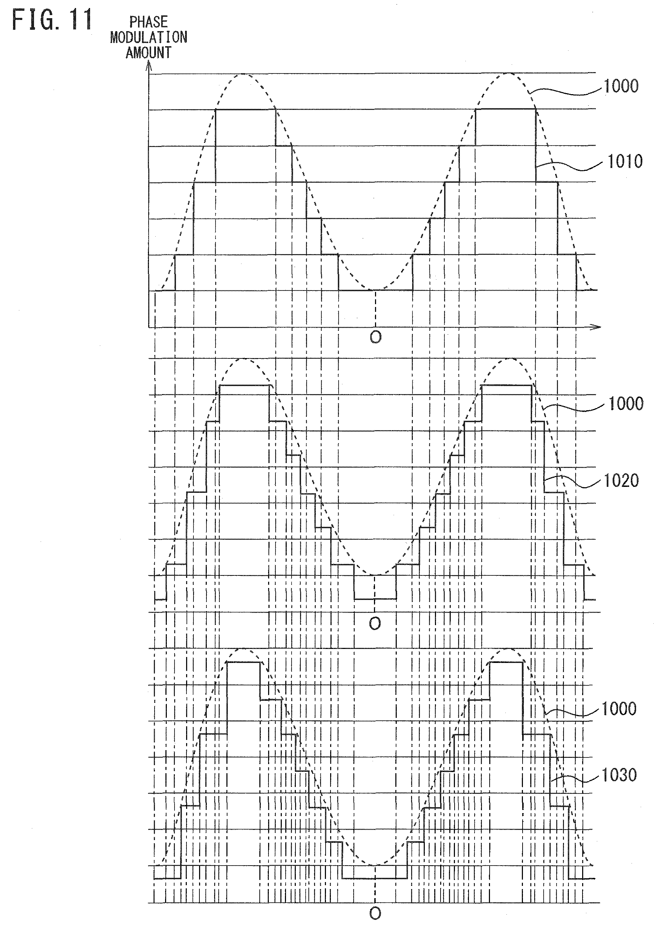

As illustrated in the phase modulation profile 410 in FIG. 4A, the phase modulation amount to be provided by the liquid crystal element 2-1 (k=0) is divided into equal six levels. When the phase modulation amount at the center and the phase modulation amount at the most outer periphery of the luminous fluxes are equal in an ideal phase modulation profile 400 corresponding to the phase modulation profile 300 in FIG. 3, 11 annular portions are set. In other words, the phase modulation profile in FIG. 4A is the same as the phase modulation profile 310 in FIG. 3 mentioned above, and the annular-electrode pattern 411 of the liquid crystal element 2-1 is the same as the annular-electrode pattern 320 illustrated in FIG. 3. In contrast, the phase modulation amount to be provided by each of the liquid crystal element 2-2 (k=1) and the liquid crystal element 2-3 (k=2) is divided into equal seven levels as illustrated in the phase modulation profiles 420 and 430 in FIG. 4B and FIG. 4C. Accordingly, 13 annular portions are set in each of the annular-electrode patterns 421 and 431 of the liquid crystal elements 2-2 and 2-3. In this case, the positions of the boundaries between adjacent annular portions are different for each liquid crystal element.

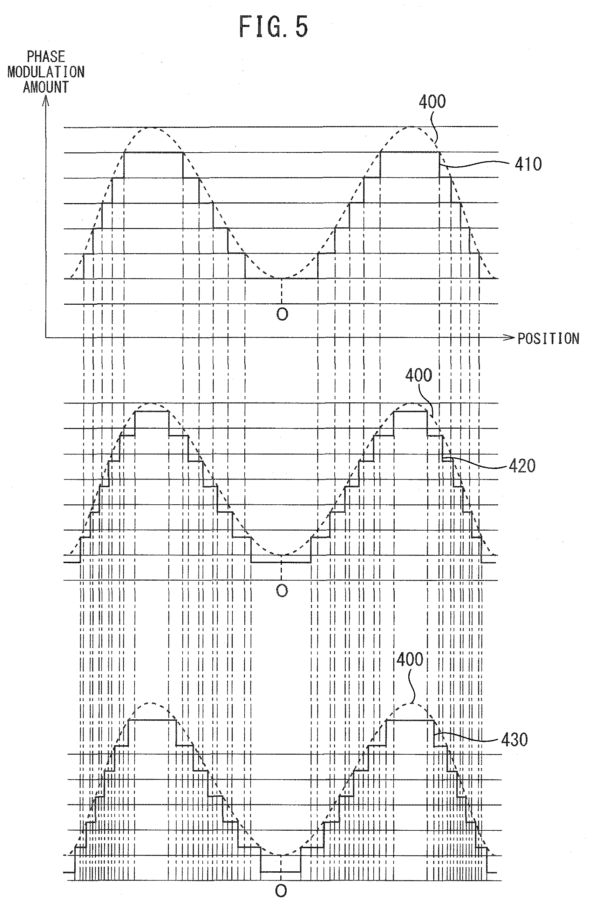

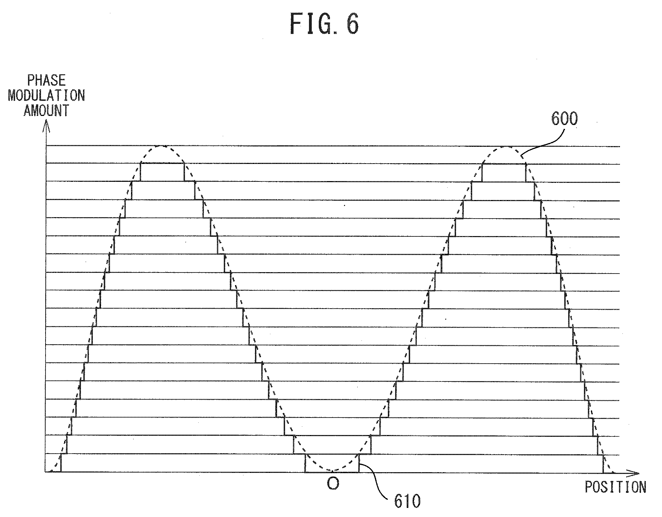

FIG. 5 is a diagram illustrating differences among phase distributions with which the respective liquid crystal elements provide a luminous flux. FIG. 6 is an example of a graph illustrating a phase distribution provided to a luminous flux passing through the entire liquid crystal optical device. In FIG. 5 and FIG. 6, the horizontal axis represents positions at a plane orthogonal to the optical axis OA. In the horizontal axis, the position of the optical axis OA is indicated by 0. The vertical axis represents phase modulation amount. The curve 400 in FIG. 5 represents an ideal phase modulation profile and corresponds to the phase modulation profile 400 in FIG. 4A to FIG. 4C. A phase modulation profile 600 indicated by a dotted line in FIG. 6 represents an ideal phase modulation profile corresponding to a phase modulation profile 610 obtained by synthesizing phase modulation profiles provided by the respective liquid crystal elements (i.e., the phase modulation profile 600 has a phase modulation amount three times as large as the phase modulation amount of the ideal phase modulation profile for each liquid crystal element). The phase modulation profiles 410 to 430 illustrate phase modulations with which the respective liquid crystal elements 2-1 to 2-3 provide a luminous flux and that correspond to the respective phase modulation profiles 410 to 430 in FIG. 4A to FIG. 4C. As illustrated in FIG. 5, the positions of the boundaries between adjacent levels of phase modulation amount are different for each liquid crystal element. Accordingly, as illustrated in the phase modulation profile 610 in FIG. 6, the phase modulation amount provided to a luminous flux passing through the liquid crystal optical device 1 is divided into equal 18 levels by 35 annular portions. Hence, the resolution by the phase distribution provided to a luminous flux passing through the liquid crystal optical device 1 is higher than that of a transparent-electrode pattern of each liquid crystal element. The phase modulation profile 610 can approximate the ideal phase modulation profile 400 more appropriately than any of the phase modulation profiles 410 to 430.

The number M of levels of phase modulation amount in each liquid crystal element is not limited to the above-described example. The number M of levels of phase modulation amount may be set appropriately according to the use and specification of the liquid crystal optical device 1. For example, the number M of levels of phase modulation element may be 16. In other words, for one of the N liquid crystal elements, the difference between the maximum value and the minimum value of the phase modulation amount is divided into 16 levels, and for each of the other liquid crystal elements, the difference between the maximum value and the minimum value of the phase modulation amount is divided into 17 levels. In this case, when the number of liquid crystal elements is three (i.e., N=3), the phase modulation amount provided to a luminous flux passing through the liquid crystal optical device 1 is divided into 48 levels.

In order for the annular portions to have the same difference in phase modulation amount between adjacent annular portions of the liquid crystal layer 10, the annular electrodes may have the same difference in voltage to be applied across the liquid crystal layer 10 between the annular electrodes formed in the adjacent annular portions. In order for voltages to be applied to the respective annular electrodes to have equal differences in voltage to be applied between adjacent annular electrodes, an annular electrode corresponding to the position at which the phase modulation amount is the maximum and an annular electrode corresponding to the position at which the phase modulation amount is the minimum are determined on the basis of the corresponding phase modulation profile. Then, the control circuit 3 applies each of a voltage to be applied for the maximum phase modulation amount and a voltage to be applied for the minimum phase modulation amount to the corresponding annular electrode. The multiple annular electrodes are connected so that the adjacent annular electrodes are connected by electrodes (resistors) having the same electric resistance. Accordingly, the differences in voltage between the adjacent annular electrodes are to be the same by resistance division. By controlling voltages to be applied as described above, the number of lead-out electrodes can be reduced and the configuration of the control circuit 3 can be simplified, in comparison with the case of controlling voltages to be applied to the respective annular electrodes independently.

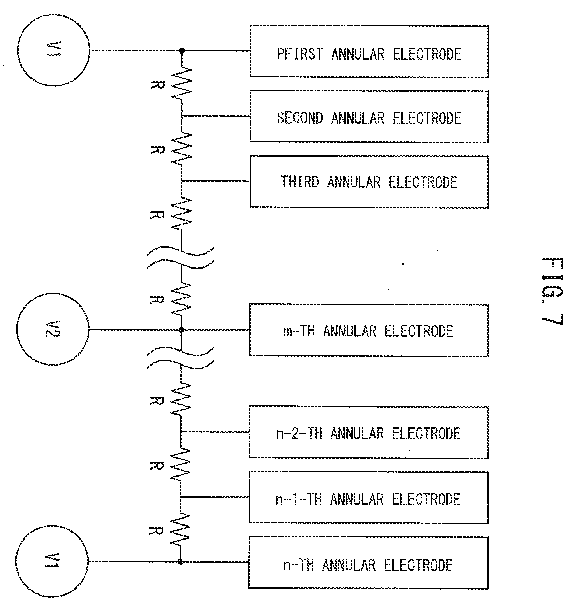

FIG. 7 is a diagram illustrating the relationship between each annular electrode and a voltage to be applied when each of the liquid crystal elements 2-1 to 2-3 has n annular electrodes. In FIG. 7, an annular electrode 1 is the center electrode, an annular electrode n is the annular electrode located at the most outer periphery, and an annular electrode m is the annular electrode to which the maximum voltage is to be applied. In this example, the same voltage V1 is applied to the first annular electrode, which is the center electrode, and the n-th annular electrode at the most outer periphery, and a voltage V2 is applied to the m-th annular electrode.

Wherein, according to equation (1), the number of levels of phase modulation amount of the liquid crystal element corresponding to k=0 (e.g., the liquid crystal element 2-1) is M, which is smaller, by one, than the number (M+1) of levels of phase modulation amount of the liquid crystal element corresponding to k≠0 (e.g., each of the liquid crystal elements 2-2 and 2-3). Accordingly, a difference $\Delta V_1$=(V2-V1) between the maximum voltage V2 and the minimum voltage V1 at the liquid crystal element corresponding to k≠0 is set so as to satisfy $\Delta V_1=\Delta V_0(M+1)/M$ with respect to a difference $\Delta V_0$=(V2-V1) between the maximum voltage V2 and the minimum voltage V1 in the liquid crystal element corresponding to k=0. For example, when the number of levels in the liquid crystal element 2-1 corresponding to k=0 is six and the difference in voltage between the level providing the maximum phase modulation amount and the level providing the minimum phase modulation amount in the liquid crystal element 2-1 is V as illustrated in FIG. 4A to FIG. 4C, the difference in voltage between the level providing the maximum phase modulation amount and the level providing the minimum phase modulation amount in each of the liquid crystal elements 2-2 and 2-3, in which the number of levels is seven, is 7/6 V.

Voltage to be applied to each liquid crystal element may be determined so that the maximum phase modulation amount and the minimum phase modulation amount of the liquid crystal element are equal respectively to the phase modulation amount obtained by equally dividing the maximum phase modulation amount with which the entire liquid crystal optical device 1 provides a luminous flux by the number of liquid crystal elements included in the liquid crystal optical device 1 and the phase modulation amount obtained by equally dividing the minimum phase modulation amount with which the entire liquid crystal optical device 1 provides a luminous flux by the number of liquid crystal elements included in the liquid crystal optical device 1.

A phase distribution with which the liquid crystal optical device 1 provides a luminous flux does not need to be a distribution that is symmetric with respect to the optical axis. For example, an arrangement pattern for the transparent electrode 13 of each of the liquid crystal elements may be determined so that the liquid crystal optical device 1 can provide a luminous flux with a phase distribution for correcting wavefront aberrations that are asymmetric with respect to the optical axis, such as coma aberration, occurring in the entire optical system in which the liquid crystal optical device 1 is disposed.

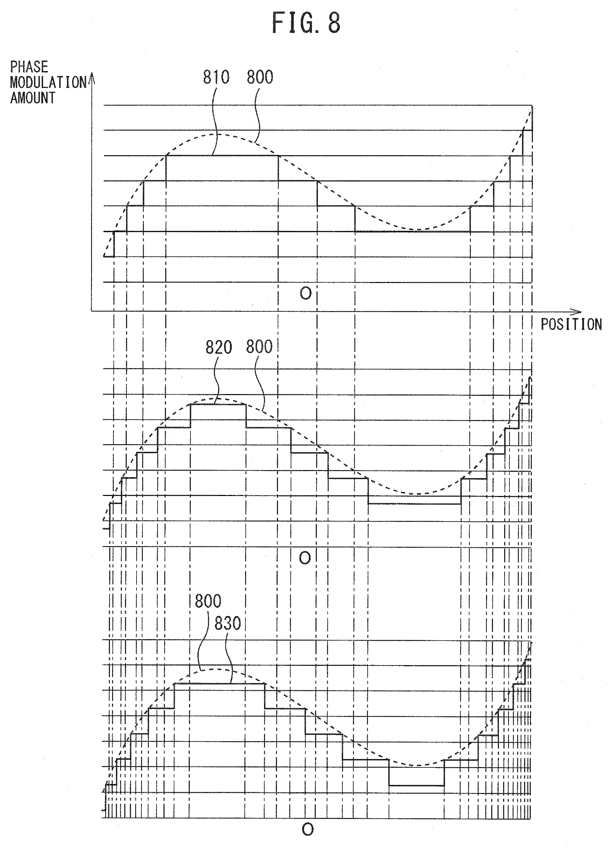

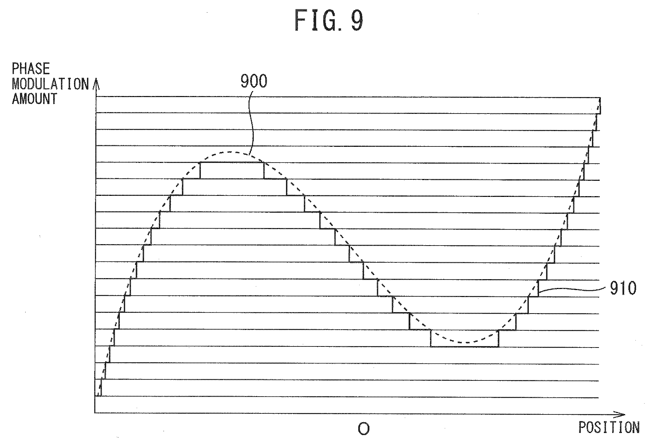

FIG. 8 is a diagram illustrating another example of phase modulation profiles of the liquid crystal elements 2-1 to 2-3 determined according to equation (1) when N=3 and M=7. FIG. 9 is a diagram illustrating another example of a phase modulation profile provided to a luminous flux passing through the entire liquid crystal optical device 1. An ideal phase modulation profile 800 presented in FIG. 8 and an ideal phase modulation profile 900 presented in FIG. 9 and corresponding to that obtained by synthesizing phase modulation profiles provided by the respective liquid crystal elements at high speed are, for example, for correcting asymmetric aberrations, such as coma aberration, occurring in the optical system including the liquid crystal optical device 1.

In FIG. 8 and FIG. 9, the horizontal axis represents positions at a plane orthogonal to the optical axis OA. In the horizontal axis, the position of the optical axis OA is indicated by 0. The vertical axis represents phase modulation amount. As presented in the phase modulation profile 810 in FIG. 8, the phase modulation amount to be provided by the liquid crystal element 2-1 (k=0) is divided into equal six levels. Then, for each of the levels, a partial electrode is disposed on the part of the liquid crystal layer 10 corresponding to the level. In contrast, as illustrated in the phase modulation profiles 820 and 830, the phase modulation amount to be provided by each of the liquid crystal element 2-2 (k=1) and the liquid crystal element 2-3 (k=2) is divided into equal seven levels. In this case, the positions of the boundaries between adjacent levels of phase modulation amount, i.e., the positions of the boundaries between adjacent partial electrodes are different for each liquid crystal element. Accordingly, the phase modulation amount provided to a luminous flux passing through the liquid crystal optical device 1 is divided into equal 18 levels as illustrated by a phase modulation profile 910 in FIG. 9. Consequently, the difference between the phase modulation profile 910 with which the entire liquid crystal optical device 1 provides a luminous flux and the corresponding ideal phase modulation profile 900 is smaller than the difference between each of the phase modulation profiles 810 to 830 with which the respective liquid crystal elements provides a luminous flux and the ideal phase modulation profile 800.

As illustrated in FIG. 8, when the local maximum point and the local minimum point of the phase modulation amount and the modulation amounts at the most outer periphery of the active area of the liquid crystal layer are different from each other, the control circuit 3 supplies, to the partial electrode formed at each of the local maximum point, the local minimum point, and the most outer periphery of the active area, a voltage corresponding to the phase modulation amount of the part at which the partial electrode is provided, via a lead-out electrode. Adjacent partial electrodes may be connected by electrodes (resistors) having the same electric resistance.

The lead-out electrodes for the control circuit 3 supplying electric power to the annular electrodes of the liquid crystal elements may be disposed at the same position at a plane orthogonal to the optical axis OA. This makes it possible to reduce the ratio of a part of a luminous flux passing through the lead-out electrodes to the luminous flux entering the liquid crystal optical device 1, whereby the liquid crystal optical device 1 can provide a larger part of the entering luminous flux with a desired phase distribution.

As described above, in the liquid crystal optical device, transparent-electrode patterns are determined so that the positions of the boundaries between partial electrodes for an entering luminous flux are different for each liquid crystal element. Hence, the liquid crystal optical device can provide a passing luminous flux with a phase distribution having a resolution higher than that of the transparent-electrode pattern of each liquid crystal element. Consequently, the liquid crystal optical device can reduce the error between an ideal and continuous phase distribution provided to a luminous flux and a discrete phase distribution actually provided to a luminous flux, hence being capable of providing a luminous flux with a more appropriate phase distribution. In addition to this, the liquid crystal optical device can reduce the number of levels of phase modulation amount with which each liquid crystal element provides a luminous flux, in comparison with the number of levels of phase modulation amount with which the entire liquid crystal optical device provides a luminous flux, thus requiring a smaller number of partial electrodes to be included in each liquid crystal element. Hence, the liquid crystal optical device can reduce the number of gaps between the partial electrodes and the number of lead-out electrodes.

Note that some of the multiple boundaries each between two adjacent partial electrodes in each liquid crystal element may be located at the same position with respect to a luminous flux passing through the liquid crystal elements. In this case, as the above, the others of the multiple boundaries each between two adjacent partial electrodes are located at different positions with respect to the luminous flux passing though the liquid crystal elements. Hence, the liquid crystal optical device can provide the passing luminous flux with a phase distribution having a resolution higher than that of the transparent-electrode pattern of each liquid crystal element.

According to a modified example, the liquid crystal optical device may include two pairs of the above-described liquid crystal elements, and the arrangement patterns of the electrodes and the orientation directions of the liquid crystals of the respective pairs may be orthogonal to each other, for allowing a desired phase modulation to light flux having a polarized plane in an arbitrary direction. Alternatively, the liquid crystal optical device may include the above-described pairs of liquid crystal elements for each type of aberrations to be corrected.

According to another modified example, the differences in voltage to be applied between adjacent partial electrodes may be different. In other words, the differences between adjacent levels in phase modulation amount in each liquid crystal element may be different for each level. For example, to avoid partial electrodes becoming too minute, for at least one liquid crystal element, the number of levels of phase modulation amount included in an interval between two adjacent extreme values of a phase adjustment amount along a plane orthogonal to the optical axis may be smaller as the interval becomes smaller, i.e., the phase adjustment amount changes more abruptly.

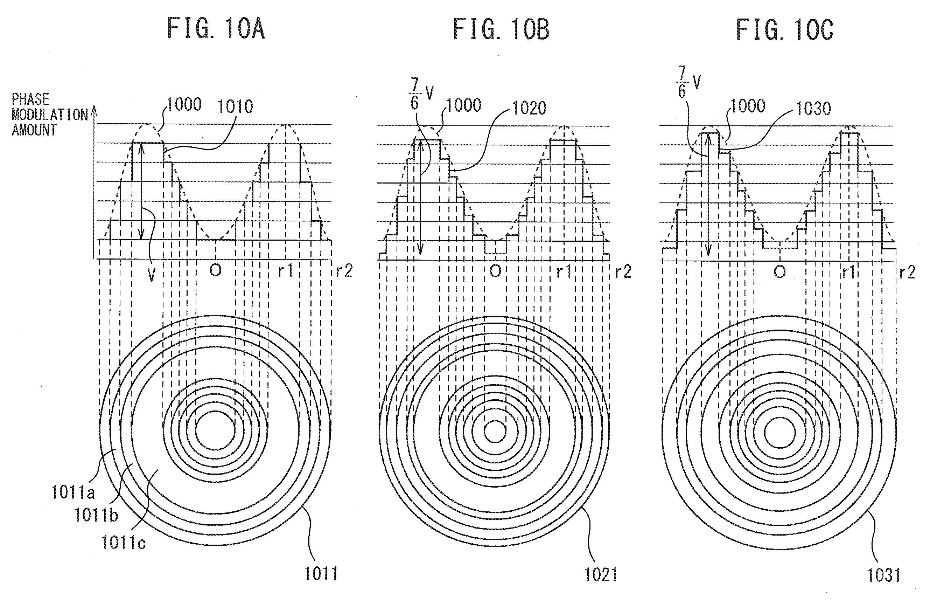

FIG. 10A to FIG. 10C are diagrams illustrating an example of phase modulation profiles of the liquid crystal elements 2-1 to 2-3 and corresponding annular-electrode patterns for providing a luminous flux with phase modulation corresponding to the phase modulation profile illustrated in FIG. 3, according to the modified example. In the upper part of each of FIG. 10A to FIG. 10C, the horizontal axis represents positions at a plane orthogonal to the optical axis OA. In the horizontal axis, the position of the optical axis OA is indicated by 0. The vertical axis represents phase modulation amount. In the lower part of each of FIG. 10A to FIG. 10C, annular-electrode patterns 1011, 1021, and 1031 formed on the respective liquid crystal elements 2-1 to 2-3 are illustrated. As in FIG. 3, the gaps between the annular electrodes are indicated by solid lines. In addition, in this modified example, as the above, annular-electrode patterns are determined according to equation (1) by assuming N=3.

As illustrated in the phase modulation profile 1010 in FIG. 10A, in a range from a position 0 of the optical axis at which the phase modulation amount is the local minimum value to a position r1 at which the phase modulation amount is the local maximum value, the phase modulation amount is divided into equal six levels (i.e., M=6) as in the phase modulation profile illustrated in FIG. 4A. On the other hand, in a range from the position r1 to the position corresponding to the most outer periphery of an active area, i.e., a position r2, which is adjacent to the position r1 and at which the phase modulation amount is the local minimum value, the phase modulation amount is divided into four levels. In particular, the difference in phase modulation amount between adjacent levels in the part where the phase modulation amount changes abruptly is twice as large as the difference in phase modulation amount between adjacent levels in the range from the position 0 to the position r1. Hence, in this modified example, 9 annular portions, which are fewer than the number of annular portions included in the annular-electrode pattern illustrated in FIG. 4A, are set in an ideal phase modulation profile 1000 corresponding to the phase modulation profile 300 in FIG. 3.

In an example, as that illustrated in FIG. 7, where each annular electrode at which the phase modulation amount is an extreme value is connected to the control circuit 3, a larger resistance value may be set for the resistor connecting the corresponding two annular electrodes as the difference in phase modulation amount between adjacent levels becomes larger, in order to have the phase modulation profile as described above. In the example in FIG. 10A, each of the resistor connected between an annular electrode 1011a, which is second from the most outer periphery, and an annular electrode 1011b, which is third from the most outer periphery, and the resistor connected between the annular electrode 1011b and an annular electrode 1011c, which is fourth from the most outer periphery, corresponding to the part in which the difference in phase modulation amount between adjacent levels in the annular-electrode pattern 1011 of the liquid crystal element 2-1 is twice as large as the difference in phase modulation amount between adjacent levels in the other part has a resistance value that is twice as large as that of each resistor connected between other annular electrodes.

Similarly, as illustrated in the phase modulation profiles 1020 and 1030 in FIG. 10B and FIG. 10C, the phase modulation amount that each of the liquid crystal element 2-2 (k=1) and the liquid crystal element 2-3 (k=2) provides in the range from the position 0 of the optical axis to the position r1, at which the phase modulation amount is a local maximum value, is divided into equal seven levels. In contrast, the phase modulation amount in the range from the position r1 to the position r2 is divided into five levels or four levels. In the phase modulation profiles 1020 and 1030, as the above, the difference in phase modulation amount between adjacent levels in the part where the phase modulation amount changes abruptly is twice as large as the difference in phase modulation amount between adjacent levels in the range from the position 0 to the position r1. Accordingly, in the annular-electrode patterns 1021 and 1031 of the liquid crystal elements 2-2 and 2-3, 11 or 10 annular portions, which are fewer than the number of annular portions included in the annular-electrode pattern in the corresponding one of FIG. 4B and FIG. 4C, are set. Note that the positions of the boundaries between adjacent annular portions are different for each liquid crystal element, also in this modified example.

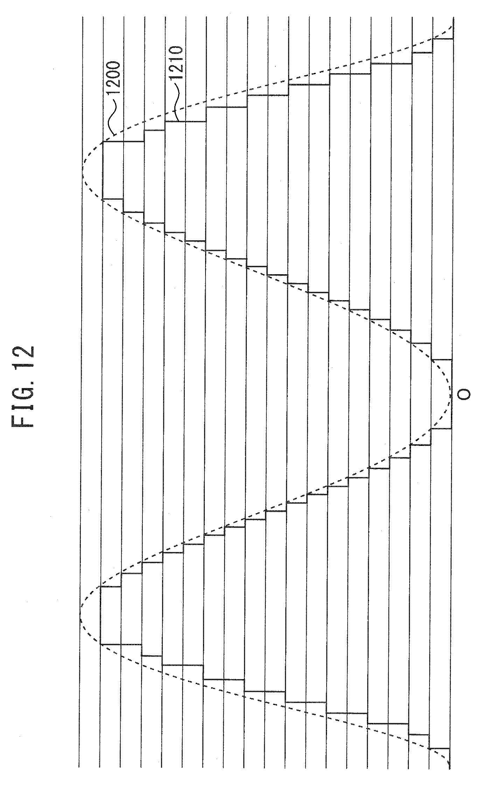

FIG. 11 is a diagram illustrating differences in phase distribution with which the liquid crystal elements having the annular-electrode patterns illustrated in FIG. 10A to FIG. 10C provide a luminous flux. FIG. 12 is a diagram illustrating an example of a phase distribution provided to a luminous flux passing through the entire liquid crystal optical device. In FIG. 11 and FIG. 12, the horizontal axis represents positions at a plane orthogonal to the optical axis OA. In the horizontal axis, the position of the optical axis OA is indicated by 0. The vertical axis represents phase modulation amount. Each curve 1000 in FIG. 11 represents an ideal phase modulation profile with which each liquid crystal element provides a luminous flux and corresponds to each phase modulation profile 1000 in FIG. 10A to Fig. 10C. Phase modulation profiles 1010 to 1030 represent phase modulations which the respective liquid crystal elements 2-1 to 2-3 applies on a luminous flux, and correspond to phase modulation profiles 1010 to 1030 in FIG 10A to FIG. 10C. A phase modulation profile 1200 indicated by a dotted line in FIG. 12 is an ideal phase modulation profile corresponding to a phase modulation profile 1210 obtained by synthesizing phase modulation profiles provided by the liquid crystal elements. As illustrated in FIG. 11, the positions of the boundaries between adjacent levels of phase modulation amount are different for each liquid crystal element. Accordingly, as illustrated in the phase modulation profile 1210 in FIG. 12, the phase modulation amount provided to a luminous flux passing through the liquid crystal optical device 1 is to be that divided into equal 18 levels by 30 annular portions. Hence, in this modified example, as the above, the resolution corresponding to the phase distribution provided to a luminous flux passing through the liquid crystal optical device 1 is higher than the resolution of the transparent-electrode pattern included in each liquid crystal element. In addition to this, in this modified example, the minimum width of the annular portions is larger than that in the above-described embodiment, consequently facilitating formation of each transparent-electrode pattern on a transparent substrate.

To adjust the differences between adjacent levels of phase modulation amount individually, a configuration may be made so that the partial electrodes of each liquid crystal element are insulated from each other, and each of the partial electrodes receives, via a lead-out electrode from the control circuit, a voltage corresponding to the phase modulation amount with which the part in which the partial electrode is formed provides a luminous flux.

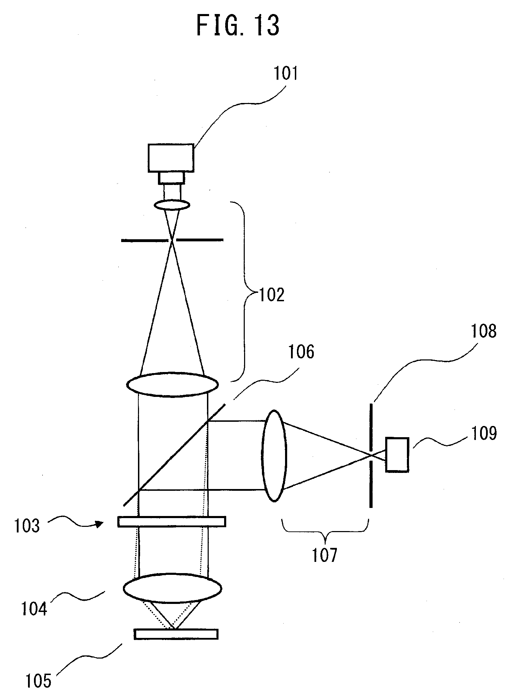

FIG. 13 illustrates a schematic configuration diagram of a laser microscope 100 including the liquid crystal optical device according to any of the embodiment and modified examples of the present invention. A laser luminous flux emitted by a laser light source 101, which is a coherent light source, is adjusted by a collimate optical system 102 to parallel rays. The parallel rays pass through the liquid crystal optical device 103 according to any of the above-described embodiment and modified examples and is then focused on a sample 105 by an objective lens 104. A luminous flux including information of the sample, such as a luminous flux reflected or diffused by the sample 105 or fluorescence generated by the sample or the like, follows the optical path in reverse, is reflected by a beam splitter 106, and is then focused again on a confocal pinhole 108 by a confocal optical system 107, which is a second optical system. The confocal pinhole 108 shuts out any luminous flux except for that from the focal position of the sample, whereby a detector 109 obtains a signal having an excellent signal-to-noise ratio. The laser light source 101 may include multiple laser light sources emitting laser beams having different wavelengths.

The laser microscope 100 can improve imaging performance by estimating wavefront aberrations occurring in the optical system from the laser light source 1 to the position at which a luminous flux is concentrated including the objective lens 104, and by displaying, on the liquid crystal optical device 103, a phase distribution that can cancel the wavefront aberrations as a phase modulation profile.

In the above-described embodiment, an example of using the liquid crystal optical device of the present invention for correcting aberrations in the optical system such as a laser microscope is described. However, the present invention is not limited to such an example. For example, the liquid crystal optical device of the present invention may be used as a lens with a refraction index distribution symmetric with respect to the optical axis.

Reference Signs List

| | |
|---|---|
| 1 | liquid crystal optical device |
| 2-1 to 2-3 | liquid crystal element |
| 3 | control circuit |
| 10 | liquid crystal layer |
| 11, 12 | transparent substrate |
| 13, 14 | transparent electrode |
| 13-1 to 13-n | annular electrode (partial electrode) |
| 15 | liquid crystal molecules |
| 16 | sealing member |
| 100 | laser microscope |
| 101 | laser light source |
| 102 | collimate optical system |
| 103 | aberration correction device |
| 104 | objective lens |
| 105 | sample |
| 106 | beam splitter |
| 107 | confocal optical system |
| 108 | confocal pinhole |
| 109 | detector |

**Claims**

1. A liquid crystal optical device comprising N liquid crystal elements arranged along an optical axis where N is an integer larger than or equal to two, each of the N liquid crystal elements comprising:

   a liquid crystal layer in which liquid crystal molecules aligned along a predetermined direction are contained; and two transparent electrodes disposed so as to face each other with the liquid crystal layer disposed therebetween, wherein
   at least one of the two transparent electrodes includes a plurality of partial electrodes, and wherein, for each of levels obtained by dividing, by a predetermined number of the levels, difference between a maximum value and a minimum value of a phase modulation amount in a phase distribution provided to a luminous flux passing through the liquid crystal layer, at least one of the plurality of partial electrodes is disposed on a part of the liquid crystal layer, the part providing the luminous flux with a phase modulation amount corresponding to the level, and a position of boundary between any two adjacent ones of the partial electrodes, with respect to the luminous flux, is different for each of the liquid crystal elements.

2. The liquid crystal optical device according to claim 1, wherein, for each of the N liquid crystal elements, the plurality of partial electrodes are disposed in the liquid crystal element so that the phase modulation amounts of the respective levels are different for each of the N liquid crystal elements by phase modulation amount difference obtained by dividing, by the N equally, a phase modulation amount which corresponds to difference between adjacent levels and is obtained by dividing the difference between the maximum value and the minimum value of the phase modulation amount by the predetermined number of levels equally.

3. The liquid crystal optical device according to claim 1, wherein, in at least one of the N liquid crystal elements, the plurality of partial electrodes are disposed so that, as an interval between positions corresponding to two adjacent extreme values of the phase modulation amount at a plane orthogonal to the optical axis is smaller, number of levels of phase modulation amount included in the interval becomes smaller.

4.  The liquid crystal optical device according to any one of claims 1 to 3, wherein positions of lead-out electrodes supplying electric power to the plurality of partial electrodes, at a plane orthogonal to the optical axis are the same among the plurality of liquid crystal elements.

5.  The liquid crystal optical device according to any one of claims 1 to 4, further comprising a control circuit that applies, between each of the plurality of partial electrodes and the transparent electrode facing the partial electrode, voltage according to the level of phase modulation amount provided to a luminous flux passing through a part in which the partial electrode is disposed in the liquid crystal layer, for each of the N liquid crystal elements.

6.  The liquid crystal optical device according to claim 5, wherein,

    for each of the N liquid crystal elements, each two partial electrodes adjacent to each other among the plurality of partial electrodes are connected to each other by a resistor, and
    the control circuit applies voltage between the partial electrode corresponding to a position at which the phase modulation amount is a local maximum value in a phase modulation profile and the transparent electrode facing the partial electrode so that the phase modulation amount is to be a local maximum value, and applies voltage between the partial electrode corresponding to a position at which the phase modulation amount is a local minimum value in the phase modulation profile and the transparent electrode facing the partial electrode so that the phase modulation amount is to be a local minimum value.

7.  The liquid crystal optical device according to claim 5 or 6, wherein

    the predetermined number of levels for a first liquid crystal element of the N liquid crystal elements is first number of levels, and the predetermined number of levels for each of the others of the N liquid crystal elements is second number of levels corresponding to a number obtained by adding one to the first number of levels, and
    the control circuit controls voltage between each of the partial electrodes and the transparent electrode facing the partial electrode for each of the liquid crystal elements so that a ratio of a second voltage difference to a first voltage difference is to be equal to a ratio of the second number of levels to the first number of levels, the first voltage difference being difference between voltage applied between the partial electrode corresponding to the maximum value of the phase modulation amount among the plurality of partial electrodes and the transparent electrode facing the partial electrode and voltage applied between the partial electrode corresponding to the minimum value of the phase modulation amount and the transparent electrode facing the partial electrode in the first liquid crystal elements, the second voltage difference being difference between voltage applied between the partial electrode corresponding to the maximum value of the phase modulation amount among the plurality of partial electrodes and the transparent electrode facing the partial electrode and voltage applied between the partial electrode corresponding to the minimum value of the phase modulation amount and the transparent electrode facing the partial electrode in each of the other liquid crystal elements.

**Amended claims under Art. 19.1 PCT**

1.  (amended) A liquid crystal optical device comprising N liquid crystal elements arranged along an optical axis where N is an integer larger than or equal to two, each of the N liquid crystal elements comprising:

    a liquid crystal layer in which liquid crystal molecules aligned along a predetermined direction are contained; and
    two transparent electrodes disposed so as to face each other with the liquid crystal layer disposed therebetween, wherein
    at least one of the two transparent electrodes includes a plurality of partial electrodes, and wherein, for each of levels obtained by dividing, by a predetermined number of the levels, difference between a maximum value and a minimum value of a phase modulation amount in a phase distribution provided to a luminous flux passing through the liquid crystal layer, the phase distribution including extreme values of the phase modulation amount between the optical axis and a most outer periphery of the luminous flux, at least one of the plurality of partial electrodes is disposed on a part of the liquid crystal layer, the part providing the luminous flux with a phase modulation amount corresponding to the level, and a width of each of the plurality of partial electrodes along a direction away from the optical axis is larger as a change of the phase modulation amount along the phase distribution in the direction away from the optical axis at a position corresponding to the partial electrode is more gradual, and

a position of boundary between any two adjacent ones of the partial electrodes, with respect to the luminous flux, is different for each of the liquid crystal elements.

**2.** The liquid crystal optical device according to claim 1, wherein, for each of the N liquid crystal elements, the plurality of partial electrodes are disposed in the liquid crystal element so that the phase modulation amounts of the respective levels are different for each of the N liquid crystal elements by phase modulation amount difference obtained by dividing, by the N equally, a phase modulation amount which corresponds to difference between adjacent levels and is obtained by dividing the difference between the maximum value and the minimum value of the phase modulation amount by the predetermined number of levels equally.

**3.** The liquid crystal optical device according to claim 1, wherein, in at least one of the N liquid crystal elements, the plurality of partial electrodes are disposed so that, as an interval between positions corresponding to two adjacent extreme values of the phase modulation amount at a plane orthogonal to the optical axis is smaller, number of levels of phase modulation amount included in the interval becomes smaller.

**4.** The liquid crystal optical device according to any one of claims 1 to 3, wherein positions of lead-out electrodes supplying electric power to the plurality of partial electrodes, at a plane orthogonal to the optical axis are the same among the plurality of liquid crystal elements.

**5.** The liquid crystal optical device according to any one of claims 1 to 4, further comprising a control circuit that applies, between each of the plurality of partial electrodes and the transparent electrode facing the partial electrode, voltage according to the level of phase modulation amount provided to a luminous flux passing through a part in which the partial electrode is disposed in the liquid crystal layer, for each of the N liquid crystal elements.

**6.** The liquid crystal optical device according to claim 5, wherein,

for each of the N liquid crystal elements, each two partial electrodes adjacent to each other among the plurality of partial electrodes are connected to each other by a resistor, and

the control circuit applies voltage between the partial electrode corresponding to a position at which the phase modulation amount is a local maximum value in a phase modulation profile and the transparent electrode facing the partial electrode so that the phase modulation amount is to be a local maximum value, and applies voltage between the partial electrode corresponding to a position at which the phase modulation amount is a local minimum value in the phase modulation profile and the transparent electrode facing the partial electrode so that the phase modulation amount is to be a local minimum value.

**7.** The liquid crystal optical device according to claim 5 or 6, wherein

the predetermined number of levels for a first liquid crystal element of the N liquid crystal elements is first number of levels, and the predetermined number of levels for each of the others of the N liquid crystal elements is second number of levels corresponding to a number obtained by adding one to the first number of levels, and the control circuit controls voltage between each of the partial electrodes and the transparent electrode facing the partial electrode for each of the liquid crystal elements so that a ratio of a second voltage difference to a first voltage difference is to be equal to a ratio of the second number of levels to the first number of levels, the first voltage difference being difference between voltage applied between the partial electrode corresponding to the maximum value of the phase modulation amount among the plurality of partial electrodes and the transparent electrode facing the partial electrode and voltage applied between the partial electrode corresponding to the minimum value of the phase modulation amount and the transparent electrode facing the partial electrode in the first liquid crystal elements, the second voltage difference being difference between voltage applied between the partial electrode corresponding to the maximum value of the phase modulation amount among the plurality of partial electrodes and the transparent electrode facing the partial electrode and voltage applied between the partial electrode corresponding to the minimum value of the phase modulation amount and the transparent electrode facing the partial electrode in each of the other liquid crystal elements.

# FIG. 1

CONTROL
CIRCUIT

3

OA

2-1 2-2 2-3

1

FIG. 2A

FIG. 2B

EP 3 086 167 A1

# FIG. 3

FIG. 4A   FIG. 4B   FIG. 4C

# FIG. 5

# FIG. 6

# FIG. 7

# FIG. 8

## FIG. 9

PHASE MODULATION AMOUNT

900

910

O

POSITION

FIG. 10A          FIG. 10B          FIG. 10C

FIG. 11

PHASE
MODULATION
AMOUNT

FIG. 12

# FIG. 13

## INTERNATIONAL SEARCH REPORT

International application No.

PCT/JP2014/080758

**A. CLASSIFICATION OF SUBJECT MATTER**
*G02F1/13*(2006.01)i, *G02F1/1343*(2006.01)i, *G02F1/1347*(2006.01)i

According to International Patent Classification (IPC) or to both national classification and IPC

**B. FIELDS SEARCHED**

Minimum documentation searched (classification system followed by classification symbols)
G02F1/13, G02F1/1343, G02F1/1347

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-230887 A (Panasonic Electric Works Co., Ltd.),<br>14 October 2010 (14.10.2010),<br>paragraphs [0013] to [0028]; fig. 3 to 7<br>(Family: none) | 1-3,5-6<br>4,7 |
| Y | JP 2004-101885 A (Pioneer Corp.),<br>02 April 2004 (02.04.2004),<br>paragraphs [0022] to [0029]; fig. 8 to 11<br>& US 2004/0108984 A1 | 4,7 |
| A | JP 3-46627 A (In Focus Systems, Inc.),<br>27 February 1991 (27.02.1991),<br>entire text; all drawings<br>& US 4952036 A    & EP 408036 A2<br>& AU 5897090 A    & CA 2021071 A | 1-7 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>17 December 2014 (17.12.14) | Date of mailing of the international search report<br>06 January 2015 (06.01.15) |
| Name and mailing address of the ISA/<br>Japan Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/080758

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2006/54803 A1 (Citizen Holdings Co., Ltd.), 26 May 2006 (26.05.2006), entire text; all drawings & US 2008/0002139 A1   & EP 1816507 A1 & CN 101061419 A | 1-7 |

Form PCT/ISA/210 (continuation of second sheet) (July 2009)

EP 3 086 167 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008529064 W